# EUROPÄISCHE PATENTSCHRIFT

(11) **EP 3 097 284 B1**
(45) Veröffentlichungstag und Bekanntmachung des Hinweises auf die Patenterteilung: **06.03.2019**
(21) Anmeldenummer: 15701491.1
(22) Anmeldetag: 15.01.2015
(51) Int. Cl.: F01P 7/16, F01P 5/10, F01P 11/02, B60H 1/00, B60H 1/04, F01P 7/14, F01P 11/08, F01P 11/16

(54) **WÄRMEMANAGEMENTSYSTEM FÜR EINE VERBRENNUNGSKRAFTMASCHINE**
HEAT MANAGEMENT SYSTEM FOR AN INTERNAL COMBUSTION ENGINE
SYSTÈME DE GESTION THERMIQUE POUR UN MOTEUR À COMBUSTION INTERNE

(30) Priorität: 23.01.2014 DE 102014201167
(43) Veröffentlichungstag der Anmeldung: 30.11.2016
(73) Patentinhaber: Bayerische Motoren Werke Aktiengesellschaft, 80809 München (DE)
(72) Erfinder: RICHTER, Rainer, 81247 München (DE); ENKE, Wolfram, 01662 Meißen (DE); HOFMANN, Wolfgang, 83624 Otterfing (DE)
(86) Internationale Anmeldenummer: PCT/EP2015/050670
(87) Internationale Veröffentlichungsnummer: WO 2015/110343

(56) Entgegenhaltungen:
- EP-A2- 0 940 566
- US-A1- 2014 007 824
- US-B1- 6 371 060

## Beschreibung

Die Erfindung betrifft ein Wärmemanagementsystem für eine Verbrennungskraftmaschine nach dem Oberbegriff des Anspruchs 1.

Das Wärmemanagement der Kühlmittelkreisläufe einer Verbrennungskraftmaschine hat einen großen Einfluss auf den Kraftstoffverbrauch. Insbesondere ein Betrieb des Motors bei optimalen Temperaturen sowie der effiziente Betrieb von Verbrauchern wie beispielsweise einer Fahrzeuginnenraumheizung, aber auch eine schnelle Erwärmung des Motor- bzw. Getriebeöls, helfen, Kraftstoff einzusparen.

In der DE 10 2005 035 121 A1 ist ein Kühlsystem gezeigt, das es erlaubt, über ein im Heizungskreislauf angeordnetes Ventil den Durchfluss zur Heizung bei Bedarf zu drosseln oder ganz zu unterbinden. Nachteilig ist hier jedoch, dass mit dem Ventil eine zusätzliche Komponente verbaut werden muss.

Die gattungsgemäße US 6,371,060 B1 sowie die EP 0 940 566 A2 und die US 2014/0007824 A1 zeigen jeweils Wärmemanagementsysteme für eine Verbrennungskraftmaschine mit einem Drehschieberventil, mit dem auch ein Heizungskreislauf verbunden ist, bei dem sämtliche Eingänge geschaltet sind.

Aufgabe der Erfindung ist es, ein einfaches und kostengünstiges Wärmemanagementsystem zu schaffen, mit dem die einzelnen Kühlmittelkreisläufe der Verbrennungskraftmaschine flexibel steuerbar sind.

Erfindungsgemäß wird dies bei einem Wärmemanagementsystem für eine Verbrennungskraftmaschine mit den Merkmalen des Anspruchs 1 erreicht.

Ganz allgemein bietet das Drehschieberventil den Vorteil der temperaturunabhängigen Schaltbarkeit, was die Flexibilität des Wärmemanagementsystems gegenüber einem herkömmlich verwendeten Wachsthermostaten erheblich erhöht. Durch die Kombination von geschalteten und ungeschalteten Eingängen kann das Drehschieberventil an sich einfach im Aufbau und somit kostengünstig und klein im Bauraum gehalten werden.

Die erfindungsgemäße Konfiguration bietet die Möglichkeit, temperaturunabhängig den Heizungskreislauf abzusperren oder anzudrosseln, wenn keine Heizfunktion benötigt wird. Durch die verminderte Wärmeabgabe sowie durch den reduzierten Strömungswiderstand für das Kühlmittel durch das Aussparen des Heizungskreislaufs im Strömungsweg reduziert sich der Kraftstoffverbrauch.

Da der Heizkreislauf separat angesprochen werden kann, ist es auch möglich, die Strömungsverhältnisse dort so zu wählen, dass eine verbesserte Versorgung mit Wärme beispielsweise durch einen erhöhten Volumenstrom durch den Heizungswärmetauscher mit insgesamt geringerem Energieverbrauch erreicht wird.

Allgemein schaltet ein Drehschieberventil erheblich schneller als ein Thermostatventil. Dies erlaubt es, die Verbrennungskraftmaschine im Teillastbereich, bei der der Hauptkühlerkreislauf nicht oder nur gedrosselt geöffnet ist, wärmer, das heißt mit einer höheren Kühlmitteltemperatur zu fahren als bisher, da auf plötzliche Last- und somit Temperaturanstiege im Motorbereich durch Verstellen des Drehschieberventils ausreichend schnell geantwortet werden kann, um die Kühlmitteltemperatur im optimalen Bereich zu halten. Hierzu kann beispielsweise der Heizungskreislauf kurzfristig gezielt abgesperrt werden, um einen Volumenstrom durch den Hauptkühlerkreislauf zu erhöhen.

Andererseits kann der Heizungskreislauf auch verwendet werden, um einen Volumenstrom durch den Motorkühlkreislauf zu reduzieren, indem beispielsweise ein Kurzschlussrücklauf vom Motorkühlkreislauf zum Drehschieberventil abgesperrt oder gedrosselt wird und so nur der wesentlich geringere Volumenstrom durch den Heizungskreislauf bewegt wird. Eine Androsselung der Durchströmung des Motorkühlkreislaufs sorgt für eine gleichmäßige und dennoch reduzierte Kühlung der Verbrennungskraftmaschine, sodass diese bei einem Kaltstart schneller ihre optimale Betriebstemperatur erreicht.

Der Motorkühlkreislauf bildet hier den sogenannten "kleinen Kühlkreislauf", bei dem im Wesentlichen nur der Motorbereich, etwa das Zylinderkopfgehäuse und das Kurbelgehäuse, durchströmt wird, nicht aber der luftgekühlte Hauptkühler des Fahrzeugs.

Es ist auch möglich, zur Erhöhung der Heizwirkung die Durchströmung des Motorkühlkreislaufs oder des Kurbelgehäuses zu drosseln.

Der Ausgang des Drehschieberventils führt bevorzugt direkt in den Motorkühlkreislauf-Zulauf und ist nicht geschaltet.

Die Kühlmittelpumpe ist beispielsweise stromabwärts des Auslasses des Drehschieberventils und stromeinwärts des Eintritts des Motorkühlkreislaufs in den Motorbereich im oder in unmittelbarer Nähe eines Motorblocks der Verbrennungskraftmaschine angeordnet.

Der Rücklauf des Hauptkühlerkreislaufs und/oder ein Rücklauf des Motorkühlkreislaufs münden vorzugsweise in jeweils einen geschalteten Eingang des Drehschieberventils. Durch den schaltbaren Rücklauf des Motorkühlkreislaufs in das Drehschieberventil kann ein Bypass (z.B. gebildet durch den kleinen Kühlkreislauf) auf einfache Weise realisiert werden.

Das Drehschieberventil ist vorteilhaft motornah angeordnet, um die Strömungswege beispielsweise im kleinen Kühlkreislauf kurz zu halten. Bei kürzeren Motoren, etwa einem Vierzylinderreihenmotor, ist es möglich, das Drehschieberventil stirnseitig am Motorblock zu platzieren, vorzugsweise in unmittelbarer Nähe zu der optional in den Motorblock integrierten Kühlmittelpumpe. Bei längeren Motoren, etwa einem Sechszylinderreihenmotor, ist es hingegen aus Platzgründen oft vorteilhaft, das Drehschieberventil auf der Längsseite des Motorblocks anzuordnen.

Normalerweise ist ein Getriebeöl-Kühlkreislauf mit einem Getriebeöl-Wärmetauscher vorgesehen. Dessen Rücklauf mündet vorzugsweise in einen ungeschalteten Eingang des Drehschieberventils. Der Getriebeöl-Kühlkreislauf kommt mit einer relativ trägen Temperaturregelung aus, sodass es möglich ist, im Getriebeöl-Kühlkreislauf ein eigenes Thermostatventil vorzusehen, das insbesondere als herkömmlicher Wachsthermostat gestaltet ist. Auf diese Weise kann der Getriebeöl-Kühlkreislauf parallel zu den restlichen Kühlkreisläufen angelegt und über das Drehschieberventil an die restlichen Kühlkreisläufe, insbesondere den Motorkühlkreislauf, angekoppelt sein. Geschaltet wird der Getriebeöl-Kühlkreislauf autark über sein eigenes Thermostatventil. Auf diese Weise kann eine Steuerstellung des Drehschieberventils eingespart werden.

Der Getriebeöl-Kühlkreislauf ist vorzugsweise von den anderen Kühlkreisläufen entkoppelt und kann in der Warmlaufphase durch die ölseitige Regelung unterbrochen werden, um eine Erwärmung des Kühlmittels im Getriebeöl-Kühlkreislauf zu verhindern und damit die Erwärmung der Verbrennungskraftmaschine zu unterstützen.

Bevorzugt ist ein Motorabsperrventil vorgesehen, das z.B. eine Kühlmittelzuleitung zur Verbrennungskraftmaschine stromabwärts der Kühlmittelpumpe unterbrechen kann.

In einer Warmlaufphase ist es möglich, alle schaltbaren Eingänge des Drehschieberventils zu schließen und so eine Durchströmung auch des Motorkühlkreislaufs weitgehend zu drosseln.

Vorzugsweise wird dabei auch das Motorabsperrventil geschlossen, da dies hilft, Kavitation auf der Saugseite der Kühlmittelpumpe zu vermeiden.

In den Kühlkreisläufen ist normalerweise ein Kühlmittel-Ausgleichsbehälter vorgesehen, der ein bestimmtes Volumen an Kühlmittel aufnehmen kann und über den Luft nach außen abströmen kann.

Der Ausgleichsbehälter ist vorzugsweise mit einem ungeschalteten Eingang des Drehschieberventils verbunden.

Nach einer anderen möglichen Ausführungsform ist der Ausgleichsbehälter mit einem geschalteten Eingang des Drehschieberventils verbunden. Dies erlaubt, beispielsweise bei einem Kaltstart der Verbrennungskraftmaschine eine Kühlmittelzirkulation durch den Ausgleichsbehälter zu unterbinden, sodass das dort gespeicherte Kühlmittelvolumen nicht erwärmt wird und diese Wärmemenge zur schnelleren Erwärmung der Verbrennungskraftmaschine zur Verfügung steht. Die Kühlmittelpumpe ist vorzugsweise mechanisch angetrieben, wobei der Antrieb mit der Verbrennungskraftmaschine gekoppelt ist. Es wäre aber auch möglich, eine elektrisch angetriebene Hauptkühlmittelpumpe einzusetzen.

Es ist eine zusätzliche, elektrische Kühlmittelpumpe vorgesehen, was insbesondere bei Verwendung einer mechanisch angetriebenen Kühlmittelpumpe vorteilhaft ist, eine, da diese auch bei Stillstand der Verbrennungskraftmaschine z.B. nach Betriebsende eine Kühlmittelbewegung durch die Kühlmittelkreisläufe erlaubt.

Erfindungsgemäß ist die zusätzliche Kühlmittelpumpe in einem Abgas-Turbolader-Kühlkreislauf angeordnet. Dieser kann über einen ungeschalteten Eingang des Drehschieberventils mit den restlichen Kühlkreisläufen verbunden sein. In einer anderen Ausführungsform mündet der Abgas-Turbolader-Kühlkreislauf in den Hauptrücklauf des Motorkühlkreislaufs.

Der Abgas-Turbolader-Kühlkreislauf wird vorzugsweise nicht über das Drehschieberventil gesteuert, wenn er in den Nachlaufsituationen nach Betrieb der Verbrennungskraftmaschine über seine zusätzliche Kühlmittelpumpe die Kühlmittelbewegung in sämtlichen noch zu durchströmenden Kühlkreisläufen liefern muss und somit immer geöffnet sein kann.

Die zusätzliche Kühlmittelpumpe kann aber auch gezielt angesteuert werden, um Kühlmittel über bestimmte Stellungen des Drehschieberventils in bestimmte Kühlkreisläufe zu leiten. So ist es etwa möglich, das Drehschieberventil so zu schalten, dass über die zusätzliche Kühlmittelpumpe warmes Kühlmittel in den Heizungskreislauf geleitet wird, um die Heizleistung zu erhöhen, beispielsweise bei einer im Rahmen einer Start-Stopp-Automatik (MSA) oder aus anderen Gründen ausgeschalteten Verbrennungskraftmaschine.

Vorzugsweise sind eine Steuereinheit sowie Temperatursensoren in den einzelnen Kühlmittel-Kreisläufen vorgesehen, und das Drehschieberventil ist über die Steuereinheit in Abhängigkeit von den von den Temperatursensoren ermittelten Daten schaltbar.

Das Wärmemanagementsystem weist bevorzugt eine Kennfeldsteuerung auf, bei der in der Steuereinheit spezifische Daten für die jeweiligen Stellungen des Drehschieberventils in bestimmten Betriebsbereichen abgelegt sind. Es ist auch möglich, andere Fahrzeugdaten mit in die Steuerung des Drehschieberventils einzubeziehen, beispielsweise eine gewählte Fahrweise, den derzeitigen oder den angestrebten Kraftstoffverbrauch, eine vorhersehbare Position über GPS, die Außentemperatur oder den aktuell eingelegten Gang.

Die Erfindung wird nachfolgend anhand zweier Ausführungsbeispiele mit Bezug auf die beigefügten Zeichnungen näher beschrieben. In den Zeichnungen zeigen:
- Figur 1 eine schematische Ansicht eines erfindungsgemäßen Wärmemanagementsystems gemäß einer ersten Ausführungsform; und
- Figur 2 eine schematische Ansicht eines erfindungsgemäßen Wärmemanagementsystems gemäß einer zweiten Ausführungsform.

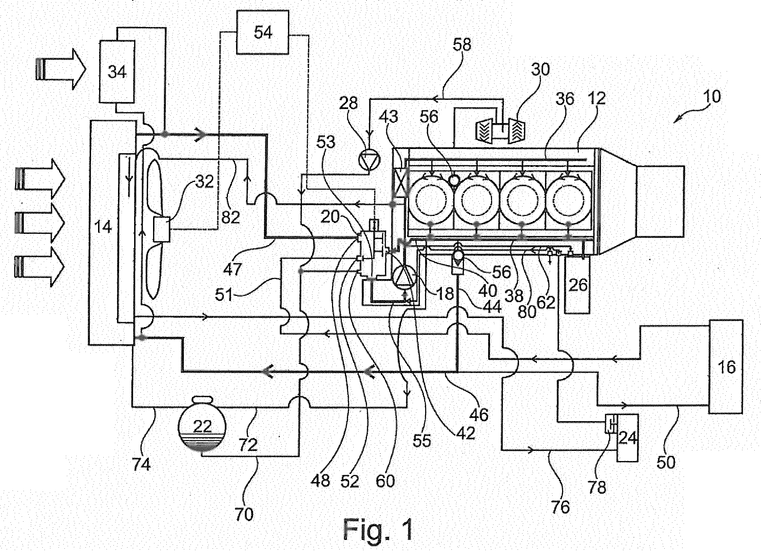

Figur 1 zeigt ein Wärmemanagementsystem 10 für eine Verbrennungskraftmaschine 12 (hier ein Reihen-Vierzylinder-Ottomotor).

Kühlmittel durchströmt in mehreren Kühlmittel-Kreisläufen unter anderem einen Motorblock der Verbrennungskraftmaschine 12, einen luftgekühlten Hauptkühler 14 und einen Heizungswärmetauscher 16. Das Kühlmittel wird hauptsächlich durch eine hier mechanisch angetriebene Kühlmittelpumpe 18 bewegt.

Die Kühlmittelströme werden über ein Drehschieberventil 20 gesteuert, dessen Eingänge mit den Rückläufen der Kühlmittel-Kreisläufe verbunden sind und dessen Ausgang in direkter Strömungsverbindung mit der Kühlmittelpumpe 18 steht, wie später im Detail beschrieben ist.

Außerdem sind noch ein Kühlmittelausgleichsbehälter 22, ein Getriebeöl-Wärmetauscher 24, ein Motoröl-Wärmetauscher 26 sowie eine zusätzliche, elektrisch betriebene Kühlmittelpumpe 28 vorgesehen, wobei Letztere mit einem Wärmetauscher (Gehäusekühlung) eines Abgas-Turboladers 30 in Fluidverbindung steht. Die elektrisch angetriebene zusätzliche Kühlmittelpumpe 28 hat in diesem Beispiel eine Leistung von etwa 20 - 150 W.

Der Hauptkühler 14 wird durch einen Lüfter 32 unterstützt. Außerdem ist ein Zusatzkühler 34 zur Unterstützung des Hauptkühlers vorgesehen, der beispielsweise als Radhauskühler ausgebildet sein kann.

In einem Motorkühlkreislauf 36 (auch als "kleiner Kühlkreislauf" bezeichnet) wird kaltes Kühlmittel von der Kühlmittelpumpe 18 zu einem Motorblock der Verbrennungskraftmaschine 12, genauer zu Kühlkanälen im Zylinderkopfgehäuse und im Kurbelgehäuse, transportiert, wo es Abwärme aufnimmt, bevor es in einer Leitung 38 gesammelt wird. Von der Sammelleitung 38 führt eine Kurzschlussleitung 40 zu einem ersten geschalteten Eingang 42 des Drehschieberventils 20. Die Kurzschlussleitung 40 bildet auch den Rücklauf des Motorkühlkreislaufs 36.

Der Motorkühlkreislauf 36 ist hier durch ein Motorabsperrventil 43 in seiner Kühlmittelzuleitung stromabwärts der Kühlmittelpumpe 18 unterbrechbar.

Von der Sammelleitung 38 geht eine Kühlmittelleitung 44 ab, die Teil eines Hauptkühlerkreislaufs 46 ist, der durch den Hauptkühler 14 und über einen Rücklauf 47 zu einem geschalteten zweiten Eingang 48 des Drehschieberventils 20 zurück führt.

Von der Leitung 44 zweigt ein Zulauf eines Heizungskreislaufs 50 ab, in dem der Heizungswärmetauscher 16 angeordnet ist, der Wärme an einen Fahrzeuginnenraum abgeben kann. Der Rücklauf 51 des Heizungskreislaufs 50 führt zu einem dritten geschalteten Eingang 52 des Drehschieberventils 20.

Ein nicht geschalteter, einziger Ausgang 53 des Drehschieberventils 20 führt über eine kurze Leitung 55 zur Kühlmittelpumpe 18.

Die Stellung des oder der Drehschieber des Drehschieberventils 20 und damit der Öffnungsgrad der geschalteten Eingänge 42, 48, 52 wird von einer Steuereinheit 54 vorgegeben, die die Teil einer Motorelektronik bilden kann. In der Steuereinheit 54 sind Daten abgelegt, die eine Kennfeldsteuerung in Abhängigkeit von vorgegebenen Betriebszuständen der Verbrennungskraftmaschine 12 ermöglichen. In diesem Beispiel werden auch die Zustände weiterer Komponenten wie dem Heizungswärmetauscher 16, dem Abgas-Turbolader 30, dem Motoröl-Wärmetauscher 26 sowie Daten von Temperatursensoren 56 im Motorblock oder in der Kühlmittelleitung 44 zum Hauptkühler 14 berücksichtigt. In Abhängigkeit von diesen Parametern wird die Stellung der geschalteten Eingänge des Drehschieberventils 20 festgelegt.

Die zusätzliche elektrische Kühlmittelpumpe 28 befindet sich in einem Abgas-Turbolader-Kühlkreislauf 58, der den Abgas-Turbolader 30 kühlt und der in einen nicht geschalteten Eingang 60 des Drehschieberventils 20 mündet. Versorgt wird der Abgas-Turbolader-Kühlkreislauf 58 durch eine Abzweigung aus dem Motorkühlkreislauf 36 (hier nicht näher gezeigt).

Der Motoröl-Wärmetauscher 26 ist direkt mit der Sammelleitung 38 des Motorkühlkreislaufs 36 verbunden. Kaltes Kühlmittel wird durch einen Abzweig 62 nach der Kühlmittelpumpe 18 zugeführt. Eine Steuerung ist in diesem Beispiel nicht vorgesehen, wäre aber durch einen zusätzlichen Thermostat realisierbar.

Der Kühlmittelausgleichsbehälter 22 führt über eine Verbindungsleitung 70 zum Rücklauf des Abgas-Turbolader-Kühlkreislaufs 58, der in den nicht geschalteten Eingang 60 des Drehschieberventils 20 mündet. Entlüftungsleitungen 72 und 74 verbinden den Kühlmittelausgleichsbehälter 22 mit dem Motorkühlkreislauf 36, genauer gesagt der Sammelleitung 38 und dem Zulauf zum Hauptkühler 14 im Hauptkühlerkreislauf 46.Der Getriebeöl-Wärmetauscher 24 befindet sich in einem vom Drehschieberventil 20 unabhängigen Getriebeöl-Kühlkreislauf 76 und wird durch ein eigenes Thermostatventil 78 geschaltet. Dies ist hier ein herkömmlicher Wachsthermostat, der bei einer vorbestimmten Temperatur den Getriebeöl-Kühlkreislauf 76 öffnet und unterhalb dieser Temperatur diesen verschließt.

Der Getriebeöl-Kühlkreislauf 76 führt durch den Motorblock in eine Zulaufleitung 80, die in die Kühlmittelleitung 55 mündet. Der Mündungspunkt liegt stromaufwärts der Kühlmittelpumpe 18, aber stromabwärts des Ausgangs 53 des Drehschieberventils 20. Vom Motorkühlkreislauf 36 zweigt zwischen der Kühlmittelpumpe 18 und dem Motorabsperrventil 43 eine Leitung 82 ab, die durch den Hauptkühler 14 und zurück zum Getriebeöl-Wärmetauscher 24 führt (Niedertemperaturschleife). Diese ist nur bei Fahrzeugen mit Getriebekühlung notwendig.

Die Kühlmittelpumpe 18 ist hier direkt in den Motorblock der Verbrennungskraftmaschine 12 integriert. Das Drehschieberventil 20 ist in dieser Ausführungsform stirnseitig an den Motorblock der Verbrennungskraftmaschine 12 in unmittelbarer Nähe der Kühlmittelpumpe 18 angesetzt.

Wird der Eingang 48 des Drehschieberventils 20 durch die Steuereinheit 54 geschlossen, so wird die Kühlmittelströmung durch den Hauptkühler 14 im Hauptkühlerkreislauf 46 unterbunden. Dieser Zustand wird vor allem beim Starten der Verbrennungskraftmaschine 12 sowie in einem Teillastbetrieb eingenommen.

Ist der Eingang 42 des Drehschieberventils 20 offen, so strömt das Kühlmittel über die Kurzschlussleitung 40 von der Heißseite der Verbrennungskraftmaschine 12 direkt in das Drehschieberventil 20 und wird von dort über die Kühlmittelpumpe 18 direkt auf die Kaltseite der Verbrennungskraftmaschine 12 zurückgeführt.

Wenn der Eingang 52 des Drehschieberventils 20 offen geschaltet ist, strömt außerdem Kühlmittel durch den Heizungskreislauf 50 über den Heizungswärmetauscher 16.

Die Schaltung der Eingänge 42 und 52 erlaubt mehrere Betriebszustände. Wenn sowohl der Eingang 42 als auch der Eingang 52 offen sind, werden der Motorkühlkreislauf 36 und der Heizungskreislauf 50 parallel durchströmt. Die Strömungsverhältnisse sind dabei so gewählt, dass ein deutlich größerer Volumenstrom durch den Motorkühlkreislauf 36 fließt als durch den Heizungskreislauf 50, wie dies bekannt ist. In diesem Betriebszustand kann sich beispielsweise die Verbrennungskraftmaschine 12 auf ihre Betriebstemperatur erwärmen, während gleichzeitig der Fahrzeuginnenraum geheizt wird.

Ist der Eingang 42 vollständig oder teilweise geschlossen, reduziert sich die Strömung durch den Motorkühlkreislauf 36, sodass die Belastung der Kühlmittelpumpe 18 reduziert wird. Durch den offenen Heizungskreislauf 50 kann Wärme abgegeben werden sowie eine gezielte Umwälzung des Kühlmittels aufrechterhalten werden. Aufgrund des höheren Strömungswiderstands ist der Kühlmittelvolumenstrom durch die Verbrennungskraftmaschine 12 reduziert. Dies kann zu einer schnelleren Erwärmung bei einem Kaltstart genutzt werden.

Ist der Eingang 52 ganz oder teilweise geschlossen geschaltet, so ist der Heizungskreislauf 50 abgekoppelt und wird nicht durchströmt. Dies ist zum einen der Fall, wenn keine Heizfunktion gewünscht ist, also die Fahrzeuginsassen die Heizung ausgeschaltet haben.

Ein anderer Einsatzzweck ist eine Fahrsituation, in der die Last der Verbrennungskraftmaschine 12 plötzlich ansteigt, beispielsweise bei einer Bergauffahrt oder einer abrupt einsetzenden Beschleunigung. In diesem Fall führt das Schließen des Heizungskreislaufs 50 in Kombination mit dem Öffnen des Eingangs 42 des Motorkühlkreislaufs 36 sowie gegebenenfalls des Eingangs 48 des Hauptkühlerkreislaufs 46 dazu, dass die gesamte Kühlmittelströmung zur Kühlung der Verbrennungskraftmaschine 12 zur Verfügung steht, sodass Temperaturspitzen vermieden werden.

In der Warmlaufphase der Verbrennungskraftmaschine können die Eingänge 42, 48 und 52 geschlossen werden, um eine Strömung des Kühlmittels auch im Motorkühlkreislauf 36 (weitgehend) zu unterbrechen und so eine schnellere Erwärmung zu erreichen. Um Kavitation auf der Saugseite der Kühlmittelpumpe 18 zu verhindern, wird hier auch das Motorabsperrventil 43 geschlossen.

Das Zu- und Abschalten des Hauptkühlerkreislaufs 46 erfolgt durch Öffnen bzw. Schließen des Eingangs 48 des Drehschieberventils 20. Dies kann (im Rahmen der vorgegebenen Ausbildung des Drehschieberventils 20) unabhängig von dem Öffnen bzw. Absperren des Motorkühlkreislaufs 36 sowie des Heizungskreislaufs 50 und außerdem temperaturunabhängig durch Vorgaben der Steuereinheit 54 erfolgen.

Die Durchströmung des Motors kann hier unter anderem im Warmlauf und in relevanten Verbrauchszyklen zur optimalen Wärmeverteilung und Reibungsoptimierung durch Ansteuerung des Drehschieberventils 20 und des Motorabsperrventils 43 gesteuert werden. Diese Funktionen sind auch in der Steuereinheit 54 abgelegt.

Die Steuereinheit 54 verfügt außerdem über ein abgespeichertes Entlüftungsprogramm, das eine Ansteuerreihenfolge für unterschiedliche Stellungen des Drehschieberventils 20 umfasst.

Dieses Programm kann beispielsweise zu Wartungszwecken in einer dazu ausgerüsteten Werkstatt ausgeführt werden. Die Verbrennungskraftmaschine 12 läuft dabei im Leerlauf. Falls die normale Leerlaufdrehzahl nicht ausreicht, kann die Drehzahl kurzzeitig angehoben oder auch für die Dauer des Entlüftungsprograms die Leerlaufdrehzahl auf ein deutlich höheres Niveau angehoben werden.

Durch gezieltes Öffnen und Schließen der einzelnen Kühlmittel-Kreisläufe, beispielsweise des Motorkühlkreislaufs 36, des Hauptkühlerkreislaufs 46 sowie des Heizungskreislaufs 50 kann gezielt in den Leitungen vorhandene Luft über die Entlüftungsleitungen 72, 74 zum Ausgleichsbehälter 22 transportiert werden, wo die Luft abgeschieden wird.

Diese Ansteuerung der schaltbaren Eingänge 42, 48, 52 des Drehschieberventils 20 ist dabei völlig unabhängig von der Steuerung des Drehschieberventils 20 in anderen Betriebszuständen und dient lediglich der gezielten Leitung des Kühlmittels durch die Entlüftungsleitungen 72, 74, sodass mitgeführte Luft im Ausgleichsbehälter 22 abgeschieden wird.

Es kann beispielsweise sinnvoll sein, kurzfristig und in vorbestimmten Intervallen sämtliche Eingänge zu schließen, um das Kühlmittel in die Entlüftungsleitung 72, 74 zu drücken. Es ist auch denkbar, gezielt Luft in Bauteilen zu sammeln und dann durch definiertes Öffnen der Teilkreisläufe im Ausgleichsbehälter 22 abzuscheiden.

Auch können gezielt die einzelnen Kühlmittel-Kreisläufe kurz nacheinander kurzfristig geöffnet und wieder geschlossen werden, um Luft aus einem Kreislauf in den anderen zu überführen und so zum Ausgleichsbehälter 22 zu bringen.

Genauso ist es möglich, jeweils nur exakt einen der Kreisläufe gezielt zu betreiben und eventuell an den Entlüftungsleitungen 72, 74 vorhandene Ventile gezielt zu öffnen und zu schließen.

Das oder die Entlüftungsprogramme sind in der Steuereinheit 54 hinterlegt und können in einem Wartungsmodus oder einem Montagemodus abgerufen werden, wobei dann die Steuersequenz automatisch durchlaufen wird.

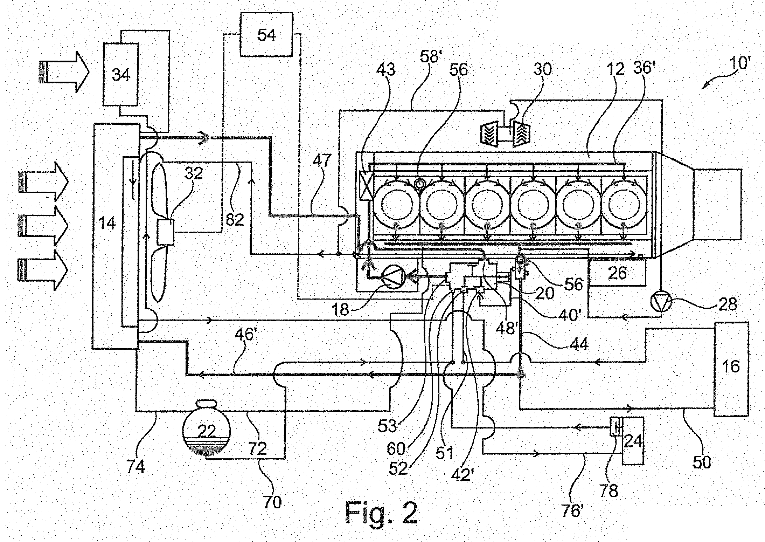

Figur 2 zeigt eine zweite Ausführungsform eines Wärmemanagementsystems 10', wobei für bereits eingeführte Bauteile die bereits bekannten Bezugszeichen weiter verwendet werden. Geänderte, aber ähnliche Bauteile werden mit dem bekannten Bezugszeichen mit einem Strich bezeichnet.

Im Unterschied zu der in Figur 1 dargestellten Ausführungsform ist die Verbrennungskraftmaschine 12' hier ein Sechszylinder-Reihenmotor, was aus Platzgründen dazu führt, dass das Drehschieberventil 20 nicht stirnseitig, sondern entlang einer Längsseite des Motorblocks der Verbrennungskraftmaschine 12 angeordnet ist.

Ebenfalls aus Platzgründen führt der Rücklauf 47' des Hauptkühlerkreislaufs 46' stückweise durch den Motorblock der Verbrennungskraftmaschine 12' zum geschalteten Eingang 48' des Drehschieberventils 20.

In der physikalischen Anordnung im Drehschieberventil 20 entspricht der Eingang 42' in der zweiten Ausführungsform dem Eingang 42 in der ersten Ausführungsform und umgekehrt. Die Funktion des Drehschieberventils 20 ist jedoch analog zu der in der ersten Ausführungsform.

In dieser Ausführungsform mündet der Rücklauf des Abgas-Turbolader-Kühlkreislauf 58' stromaufwärts eines Abzweigs der Kurzschlussleitung 40' zum Drehschieberventil 20 in die Leitung 44.

Der Zulauf des Abgas-Turbolader-Kühlkreislaufs 58' zweigt stromabwärts eines Auslasses aus dem Motorblock von einer Zulaufleitung 82 des Getriebeöl-Kühlkreislaufs 76' zum Hauptkühler 14 ab. Wie im ersten Beispiel führt der Rücklauf des Getriebeöl-Kühlkreislaufs 76' vom Getriebeöl-Wärmetauscher 24 auf den ungeschalteten Eingang 60 des Drehschieberventils 20.

Die Verbindungsleitung 70 vom Kühlmittelausgleichsbehälter 22 mündet hier in den Rücklauf des Getriebeöl-Kühlkreislaufs 76', der zum nicht geschalteten Eingang 60 des Drehschieberventils 20 führt.

Alle im Zusammenhang mit Figur 2 nicht beschriebenen Merkmale sind identisch in Aufbau und Funktion zu den in Figur 1 beschriebenen.

Wie die beiden oben beschriebenen Ausführungsformen zeigen, kann das erfindungsgemäße Prinzip der Verwendung eines Drehschieberventils mit geschalteten und ungeschalteten Eingängen zur gezielten Abtrennung eines Heizungskreislaufs sowie zur Schaltung des Motorkreislaufs und des Hauptkühlerkreislaufs, aber auch des zentralen Anschlusses von weiteren Kühlkreisläufen wie beispielsweise dem Getriebeöl-Kühlkreislauf und dem Abgas-Turbolader-Kühlkreislauf einfach für verschiedene Verbrennungskraftmaschinen in flexibler Weise umgesetzt werden. Entsprechend frei ist der Fachmann in der Gestaltung erfindungsgemäßer Wärmemanagementsysteme, wobei sämtliche Merkmale der beiden Ausführungsformen nach Belieben miteinander kombiniert oder gegeneinander ausgetauscht werden können.

## Patentansprüche

1. Wärmemanagementsystem für eine Verbrennungskraftmaschine (12, 12') mit einem Motorkühlkreislauf (36; 36'), einem Hauptkühlerkreislauf (46; 46') mit einem Hauptkühler (14), einem Heizungskreislauf (50) mit einem Heizungswärmetauscher (16), einer Kühlmittelpumpe (18), die Kühlmittel durch die Kreisläufe bewegt, und einem Drehschieberventil (20) mit wenigstens einem geschalteten Eingang (42, 48, 52, 60), wobei der Heizungsrücklauf (51) in einen schaltbaren Eingang (52) des Drehschieberventils (20) mündet, **dadurch gekennzeichnet, dass** das Drehschieberventil (20) wenigstens einen ungeschalteten Eingang (42, 48, 52; 60) aufweist, und dass eine zusätzliche, elektrische Kühlmittelpumpe (28) vorgesehen ist, die in einem Abgas-Turbolader-Kühlkreislauf (58; 58') angeordnet ist.

2. Wärmemanagementsystem nach Anspruch 1, **dadurch gekennzeichnet, dass** der Rücklauf (47; 47') des Hauptkühlerkreislaufs (46) und/oder ein Rücklauf (40) des Motorkühlkreislaufs (36) in einen geschalteten Eingang (48, 42; 42', 48') des Drehschieberventils (20) mündet.

3. Wärmemanagementsystem nach einem der vorhergehenden Ansprüche, **dadurch gekennzeichnet, dass** ein Getriebeöl-Kühlkreislauf (76; 76') mit einem Getriebeöl-Wärmetauscher (24) vorgesehen ist, dessen Rücklauf in einen ungeschalteten Eingang (60) des Drehschieberventils (20) mündet.

4. Wärmemanagementsystem nach einem der vorhergehenden Ansprüche, **dadurch gekennzeichnet, dass** im Getriebeöl-Kühlkreislauf (76; 76') ein eigenes Thermostatventil (78) vorgesehen ist.

5. Wärmemanagementsystem nach einem der vorhergehenden Ansprüche, **dadurch gekennzeichnet, dass** ein Ausgleichbehälter (22) für Kühlmittel vorgesehen ist, der mit einem ungeschalteten Eingang (52) des Drehschieberventils (20) verbunden ist.

6. Wärmemanagementsystem nach einem der vorhergehenden Ansprüche, **dadurch gekennzeichnet, dass** das Drehschieberventil (20) so geschaltet werden kann, dass über die zusätzliche Kühlmittelpumpe (28) warmes Kühlmittel in den Heizungskreislauf (50) geleitet wird.

7. Wärmemanagementsystem nach einem der vorhergehenden Ansprüche, **dadurch gekennzeichnet, dass** eine Steuereinheit (54) sowie Temperatursensoren (56) in den Kreisläufen vorgesehen sind und das Drehschieberventil (20) über die Steuereinheit (54) in Abhängigkeit von den von den Temperatursensoren (56) ermittelten Daten schaltbar ist.

8. Wärmemanagementsystem nach einem der vorhergehenden Ansprüche, **dadurch gekennzeichnet, dass** das Drehschieberventil (20) so geschaltet werden kann, dass eine Durchströmung des Motorkühlkreislaufs (36) angedrosselt wird.

9. Wärmemanagementsystem nach einem der vorhergehenden Ansprüche, **dadurch gekennzeichnet, dass** das Drehschieberventil (20) so geschaltet werden kann, dass in einer Warmlaufphase der Verbrennungskraftmaschine alle schaltbaren Eingänge des Drehschieberventils (20) geschlossen sind.

## Claims

1. A heat management system for an internal combustion engine (12, 12'), with an engine cooling circuit (36; 36'), a main cooler circuit (46; 46') with a main cooler (14), a heating circuit (50) with a heating heat exchanger (16), a coolant pump (18) which moves coolant through the circuits, and a rotary slide valve (20) with at least one switched input (42, 48, 52, 60), wherein the heating return line (51) opens into a switchable input (52) of the rotary slide valve (20), **characterised in that** the rotary slide valve (20) has at least one non-switched input (42, 48, 52, 60), and **in that** an additional electric coolant pump (28) is provided which is arranged in an exhaust turbocharger cooling circuit (58; 58').

2. A heat management system according to Claim 1, **characterised in that** the return line (47; 47') of the main cooler circuit (46) and/or a return line (40) of the engine cooling circuit (36) opens into a switched input (48, 42; 42', 48') of the rotary slide valve (20).

3. A heat management system according to one of the preceding claims, **characterised in that** a gearbox-oil cooling circuit (76; 76') with a gearbox-oil heat exchanger (24) is provided, the return line of which opens into a non-switched input (60) of the rotary slide valve (20).

4. A heat management system according to one of the preceding claims, **characterised in that** a separate thermostatic valve (78) is provided in the gearbox-oil cooling circuit (76; 76').

5. A heat management system according to one of the preceding claims, **characterised in that** a compensating reservoir (22) for coolant is provided which is connected to a non-switched input (52) of the rotary slide valve (20).

6. A heat management system according to one of the preceding claims, **characterised in that** the rotary slide valve (20) can be switched such that warm coolant is conducted into the heating circuit (50) via the additional coolant pump (28).

7. A heat management system according to one of the preceding claims, **characterised in that** a control unit (54) and also temperature sensors (56) are provided in the circuits and the rotary slide valve (20) can be switched by means of the control unit (54) dependent on the data ascertained by the temperature sensors (56).

8. A heat management system according to one of the preceding claims, **characterised in that** the rotary slide valve (20) can be switched such that a flow through the engine cooling circuit (36) is throttled.

9. A heat management system according to one of the preceding claims, **characterised in that** the rotary slide valve (20) can be switched such that in a warm-up phase of the internal combustion engine all the switchable inlets of the rotary slide valve (20) are closed.

## Revendications

1. Système de gestion de chaleur destiné à un moteur à combustion interne (12, 12') comportant un circuit de refroidissement du moteur (36, 36'), un circuit refroidisseur principal (46, 46') comprenant un refroidisseur principal (14), un circuit de chauffage (50) comprenant un échangeur de chaleur de chauffage (16), une pompe de fluide de refroidissement (18), qui fait circuler un fluide de refroidissement dans les circuits, et une soupape à tiroir rotatif (20) dont au moins une entrée (42, 48, 52, 60) est branchée, le retour du chauffage (51) débouchant dans une entrée (52) pouvant être branchée de la soupape à tiroir rotatif (20),
**caractérisé en ce que**
la soupape à tiroir rotatif (20) comporte au moins une entrée non branchée (42, 48, 52, 60), et il est prévu une pompe de fluide de refroidissement électrique supplémentaire (28) qui est monté dans un circuit de refroidissement d'un turbo compresseur de gaz d'échappement (58, 58').

2. Système de gestion de chaleur conforme à la revendication 1,
**caractérisé en ce que**
le retour (47, 47') du circuit refroidisseur principal (46) et/ou un retour (40) du circuit de refroidissement du moteur (36) débouche(nt) dans une entrée branchée (48, 42, 42', 48') de la soupape à tiroir rotatif (20).

3. Système de gestion de chaleur conforme à l'une des revendications précédentes,
**caractérisé en ce qu'**
il est prévu un circuit de refroidissement de l'huile de transmission (76, 76') comportant un échangeur de chaleur d'huile de transmission (24) dont le retour débouche dans une entrée non branchée (60) de la soupape à tiroir rotatif (20).

4. Système de gestion de chaleur conforme à l'une des revendications précédentes,
**caractérisé en ce qu'**
il est prévu dans le circuit de refroidissement de l'huile de transmission (76, 76') une soupape thermostatée individuelle (78).

5. Système de gestion de chaleur conforme à l'une des revendications précédentes,
**caractérisé en ce qu'**
il est prévu un réservoir d'équilibrage (22) du fluide de refroidissement qui est relié à une entrée non branchée (52) de la soupape à tiroir rotatif (20).

6. Système de gestion de chaleur conforme à l'une des revendications précédentes,
**caractérisé en ce que**
la soupape à tiroir rotatif (20) peut être branchée de sorte que du fluide de refroidissement chaud puisse être transféré par la pompe de fluide de refroidissement supplémentaire (28) dans le circuit de chauffage (50).

7. Système de gestion de chaleur conforme à l'une des revendications précédentes,
**caractérisé en ce qu'**
il est prévu dans les circuits, une unité de commande (54) ainsi que des capteurs de température (56) et la soupape à tiroir rotatif (20) peut être branchée par l'intermédiaire de l'unité de commande (54) en fonction des données transmises par les capteurs de température (56).

8. Système de gestion de chaleur conforme à l'une des revendications précédentes,
**caractérisé en ce que**
la soupape à tiroir rotatif (20) peut être branchée de sorte que la circulation dans le circuit de refroidissement du moteur (36) puisse être étranglée.

9. Système de gestion de chaleur conforme à l'une des revendications précédentes,
**caractérisé en ce que**
la soupape à tiroir rotatif (20) peut être branchée de sorte que, dans la phase de chauffage du moteur à combustion interne toutes les entrées pouvant être branchées de cette soupape à tiroir rotatif (20) soient fermées.
